(19) Europäisches Patentamt
European Patent Office
Office européen des brevets

(11) **EP 4 365 270 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(51) Internationale Patentklassifikation (IPC):
**C12C 1/033** (2006.01) **C12C 1/135** (2006.01)
**C12C 1/15** (2006.01)

(21) Anmeldenummer: **23206895.7**

(22) Anmeldetag: **31.10.2023**

(52) Gemeinsame Patentklassifikation (CPC):
**C12C 1/135; C12C 1/033; C12C 1/15**

(54) **VERFAHREN UND VORRICHTUNG ZUR KONTINUIERLICHEN MALZPRODUKTION**

PROCESS AND APPARATUS FOR CONTINUOUS MALT PRODUCTION

PROCÉDÉ ET DISPOSITIF POUR LA PRODUCTION CONTINUE DE MALT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.11.2022 DE 102022129254**

(43) Veröffentlichungstag der Anmeldung:
**08.05.2024 Patentblatt 2024/19**

(73) Patentinhaber: **Popp, Fritz**
**91481 Altershausen (DE)**

(72) Erfinder: **Popp, Fritz**
**91481 Altershausen (DE)**

(74) Vertreter: **Knoke, Isabel Yvonne**
**Patentanwaltskanzlei Knoke**
**Badstraße 14a**
**91301 Forchheim (DE)**

(56) Entgegenhaltungen:
DE-A1- 2 101 848    DE-U1- 202022 106 225
US-A1- 2022 135 917    US-B2- 8 397 366

- **ANONYMOUS: "Rauscher Engineering - Keimanlagen", 1 March 2017 (2017-03-01), XP093136467, Retrieved from the Internet <URL:https://web.archive.org/web/20170301215047/https://www.rauscher-maelzereien.de/keimanlagen.html> [retrieved on 20240229]**
- **UNKNOWN: "Die Technologie der Malzbereitung", 22 December 2016 (2016-12-22), XP093136419, Retrieved from the Internet <URL:https://application.wiley-vch.de/books/sample/352734036X_c01.pdf> [retrieved on 20240229]**

EP 4 365 270 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Malzproduktionsanlage für die kontinuierliche Malzproduktion und ein Verfahren zur kontinuierlichen Malzproduktion.

Stand der Technik in der Malzproduktion

Der technische Standard der Produktionsanlagen für Malz hat in den letzten Jahrzehnten so gut wie keine wesentlichen Neuerungen erfahren, vergleiche Ludwig Narziss - Die Bierbrauerei, Bd.1, 6. Auflage, 1976, S.164-242, Enke Verlag Stuttgart.

Bei den bekannten Systemen zur Produktion von Malz, wird das zur Vermälzung gereinigte Getreide in einem oder auch mehreren Weichbehältern unter Wasser gesetzt, um eine vorbestimmte Wasseraufnahme zu erreichen. Danach wird es entweder "nass ausgeweicht", d. h., mit zugesetztem Wasser in die Keimkästen gepumpt, oder "trocken ausgeweicht", also ohne zusätzliches Wasser, mittels Förderschnecke oder Kettenförderer, evtl. auch Elevatoren, in die Keimkästen transportiert.

Mit dieser Kombination schien die Entwicklung im Großen und Ganzen abgeschlossen zu sein. Mit der Erfindung der Kastenmälzerei, die nach ihrem Erfinder vielfach auch als "Saladin-Mälzerei" bezeichnet wurde, war ein ganz entscheidender und wie es schien, der letzte Schritt in der mechanischen Malzproduktion gelungen.

Allein die Dimensionen der Produktionsanlagen und damit auch der Produktchargen haben sich erheblich vergrößert und Chargen von über 300 t sind keine Seltenheit mehr.

Andere Entwicklungen, wie Wanderhaufen oder Umsetzkasten konnten sich am Markt nicht durchsetzen, da aufgetretene Probleme nicht zufriedenstellend behoben werden konnten.

Sie sind deshalb Seltenheiten geblieben, obgleich ihnen die Idee einer kontinuierlichen Produktionsweise schon zu Grunde gelegen hatte, sind aber auch diese in den Sammelbegriff "Kastenmälzerei" einzuordnen, da sie letztlich doch chargenweise produzieren.

Die Malzproduktion mit allen bisherigen, bekannten Produktionssystemen, produziert Malz chargenweise, das heißt: Eine bestimmte Menge an Getreide durchläuft als ganze Charge in Produktionsschritten, alle Stadien des gesamten Produktionsprozesses. Vom Einwiegen in die Einweichsilos, von dort in die Weichbehälter, danach von dort in die Keimkästen und nach dem Keimprozess in eine Darre. Nach dem Abdarren und dem abschließenden Herunterkühlen und beim Austrag des darrfertigen Malzes, in ein Silo zur Zwischenlagerung, wird immer weiter die ganze Charge behandelt (Narziss: "Die Technologie der Malzbereitung", Bd. 1, S 164-242, 6. Auflage, 1976, Enke Verlag Stuttgart). In einer nachfolgenden Auflage von "Die Technologie der Malzbereitung, Abriss der Bierbrauerrei", 8. Auflage Ludwig Narziß et all. WILEY-VCH Verlag, XP093136467 werden Horden, die entweder feststehend mit einem sich drehenden Wender oder die drehbar mit feststehendem Wender ausgeführt sind, offenbart.

Aus der DE 1 274 548 ist eine Mälzereianlage bekannt. Die Mälzereianlage ist mit einer in einem kreisförmigen Tunnel periodisch vorwärts bewegbaren endlosen, aus einem perforierten Boden und gekrümmten Seitenwänden bestehenden Kornfördereinrichtung versehen, wobei im Tunnel Stationen zum Einweichen, Keimen, Darren, Entleeren und Beschicken des Kornes vorgesehen sind. Gemäß dieser Druckschrift ist die Fördereinrichtung durch elastische Verbindungen in eine Anzahl von Einzelgliedern aufgeteilt, wobei die Einzelglieder durch Bauelemente der elastischen Verbindungen überbrückt sind. Die Einzelglieder sind als Kastenwägen ausgestaltet.

Aus der DE3918438 A1 ist eine Anlage zur Herstellung von Malz bekannt, welche eine Drehhorde mit einer Trennanordnung in der Drehhorde umfasst, durch die die Horde in Tageschargen unterteilt wird.

Das Dokument XP093136467 (URL:https://web.archive.org/web/2017030121 5047/https://www.rauscher-maelzereien.de/keimanlagen.html) von Rauscher Engineering offenbart eine Drehhorde und eine Festhorde. Die Drehhorde weist einen feststehenden Wender auf, die Festhorde einen umlaufenden Wender.

Die DE 21 01 848 A1 der C.Seeger Maschinenfabrik vom 20.Juli 1972 offenbart eine Vorrichtung zur Herstellung von Malz. Die Horde kann als drehbare Scheibe ausgebildet sein, die in einem an sich bekannten kreisförmigen und mit den Lade- und Aufbereitungsvorrichtungen ausgerüsteten Keim- und/oder Darrkasten gelagert ist.

Im Folgenden werden bisher eingesetzte Systeme ausführlicher erläutert.

Fast alle nachfolgend aufgezeigten Malzproduktionssysteme, ohne und auch mit deren zusätzlichen Entwicklungen folgen der Idee Saladins, ihrem Erfinder und werden noch bis in die jetzige Zeit nahezu unverändert gebaut.

Die Keimkästen nach dem Stand der Technik

Saladins Erfindung des "Keimkastens" und des "Keimkasten-Wenders" stellt seither das Grundprinzip aller daraus folgenden Entwicklungen dar, im Weiteren auch als Saladin Grundprinzip bezeichnet.

Der Keimkasten nach Saladin, ist ein langgestreckter, rechteckiger Kasten, in dem eine bestimmte Menge, d.h. eine Charge, an Grünmalz bearbeitet wird. Dabei wird unter "Grünmalz" bereits durch Wasseraufnahme gequollenes und gekeimtes Getreide in der Malzherstellung verstanden.

Mit einem unterschiedlich großen Abstand zum Boden, ist ein Zwischenboden in den Kasten eingesetzt, die sogenannte Horde, die auf einer tragenden Unterkonstruktion aufliegt.

Die Horde ist aus Blechsieben hergestellt, seltener auch aus Spalthordensieben.

Auf der Horde liegt die Charge Grünmalz in einer bestimmten Bettung und wird mittels eines Ventilators ständig von Prozessluft durchströmt. Der Raum unter der Horde dient hierfür als Luftkanal.

Das zur Vermälzung in den Keimkasten eingebrachte Weichgut (eingeweichtes Getreide), wird durch die spiralförmigen Wendespindeln aufgelockert und gewendet. Je nach Ausgestaltung des Keimkastens kommt es dabei zu einer sogenannten "Spatzenbildung", d.h. einer Verklumpung des Grünmalzes durch ineinander Verwachsen der Wurzeln, die auf Grund mangelnder Durchlüftung und daraus folgender stärkerer Erwärmung voranschreitet.

Zur Vermeidung ist es bekannt, die Stirnwände der Kästen wellenartig profiliert auszubilden, so dass zwischen den Wendespindeln des Wenders und den profilierten Stirnwänden ein möglichst geringer Spalt ausgebildet ist.

Nach dem Ende der Keimphase wird das gewonnene Grünmalz aus dem Keimkasten heraus und zur Darre transportiert.

Um für diesen Produktionszwischenschritt nur wenig Zeit zu verlieren, müssen entsprechend große Förderkapazitäten bereitgehalten werden.

In der Anfangszeit der Kastenmälzerei nach Saladin, wurde dieses "Ausräumen" mit dem Keimkastenwender ausgeführt. Dafür war am Ende des Keimkastens, bei sehr langen Kästen auch in der Mitte der Hordenlänge, eine absenkbare Klappe eingebaut, durch die das Grünmalz in die s.g. "Ausräumgosse" geschoben wurde.

Eine Förderschnecke oder ein Kettenförderer transportierte das Produkt dann aus dieser Gosse weiter zur Darre.

Um diesen zeitraubenden Arbeitsschritt zu verkürzen, kam es dann zu folgenden Entwicklungen; es wurde eine mobile Wand aus Metall an einem Kopfende des Kastens installiert, die zum Ausräumen an den Wender angekuppelt und von diesem dann mitgezogen wurde.

An diese mobile Wand war dann eine Absaugung angekuppelt, die mittels Teleskoprohren das Produkt durch ein leistungsstarkes Drehkolbengebläse und entsprechenden Rohrleitungen pneumatisch zur Darre transportierte. Diese Methode, der pneumatischen Förderung, ist sehr zeitaufwendig und oft kommt es dabei auch zu Verstopfungen der Rohrleitung.

Dazu ist diese Methode mit viel manuellem Aufwand verbunden, da die Teleskoprohre auch immer wieder mit Zwischenstücken verlängert werden müssen.

Die Weiterentwicklung zur mechanischen Ausräumung brachte hier eine deutliche Verbesserung. Bei der mechanischen Ausräumung wird das Grünmalz dabei durch eine hinter der mobilen Wand vertikal oder auch schräg angeordnete Schnecke nach oben und in einen Kettenförderer oder auf ein Förderband abgeworfen und weiter zur Darre befördert.

Beide Systeme sind bisher noch immer in Gebrauch.

In den Anfangsjahren der Saladin-Keimkästen war die manuelle Arbeit noch kein wirtschaftlich bestimmender Faktor. Die Chargen waren auch nur wenige Tonnen, wobei eine Tonne $10^3$ kg entspricht.

Unter dem Druck des Marktes und der stetig steigenden Nachfrage, steigerten die Chargen sich zuletzt aber auf über 200 Tonnen, wobei Kastenlängen bis zu 50 m und Kastenbreiten von 6 m und mehr, einige sogar mit 10 m, eingerichtet worden sind.

Keim-/Darrkästen nach dem Stand der Technik

Eine Besonderheit des Saladin-Prinzips war die Entwicklung von Keim-/Darrkästen, in denen nach der Keimphase ohne Umladung auf eine separate Darre auch das Darren des Malzes durchgeführt wird. Dadurch konnte zwar eine separate Darre eingespart werden, jedoch ist der Keim-kasten für den von Saladin erdachten Zweck blockiert, weil während der Zeit des Darrvorganges die Charge weiterhin im Kasten verbleibt. Die aufwendige Reinigung der Horde entfällt bei diesem System, jedoch steht die teure Keimeinrichtung in dieser Zeit ungenutzt. Das Grundprinzip nach Saladin, die Chargenproduktion in einem Keimkasten, blieb jedoch bei diesem System auch unverändert bestehen.

Turmmälzerei nach dem Stand der Technik

Mit der Turmmälzerei, die auch schon in den sechziger Jahren eingeführt wurde, ist letztlich die effektivste der neueren Keimkasten-Varianten entstanden. Der Keimkasten ist bei den Turmmälzereien eine Rundkonstruktion. Die Turmmälzereien, die seither gebaut wurden, erbrachten eine erhebliche Effizienzsteigerung der Keimkästen und eine deutliche Verringerung der manuellen Arbeit in der Malzproduktion.

Turmmälzereien wurden schon mit mehr als fünf Etagen und mit Chargen sogar über 300 Tonnen und Anlagendurchmessern von 25 m und auch noch darüber errichtet.

Teilweise sind eine oder auch beide untersten Etagen als Darren ausgebaut worden.

Auch die Turmmälzereien werden nach dem Saladin-Grundprinzip betrieben. Die Turmmälzereien produzieren auch in Chargen

Dabei sind zwei Systeme zu unterscheiden: Keimkästen mit fest eingebauter Horde oder Keimkästen mit Drehhorde.

Eine erste Variante nach dem obigen Stand der Technik, hat eine fest eingebaute Horde und einen umlaufenden Wender. Durch den spaltfreien, festen Anschluss der Horde an die Gebäudewände, sind wesentlich geringere Produktverluste zu verzeichnen.

Ein Nachteil aber ist, dass die Spritzwasserzuleitung zum Wender über einen Schleppschlauch hergestellt werden muss, an dem Schäden häufig auftreten.

Genauso zeigt sich auch der Austrag des Produkts vielfach problematisch, da mehrere Ablauföffnungen mit Verschlussklappen, in einer tragenden Mittelsäule zur Verfügung stehen müssen.

Die am umlaufenden Wender angebaute, heb- und absenkbare Be- und Entladeschnecke fördert das Produkt dort hinein und mit einem eingebauten Kettenförderer oder einer Förderschnecke wird es weitertransportiert.

Eine zweite Variante nach dem Stand der Technik weist ebenfalls eine fest eingebaute Horde auf. Hier hat das Rundgebäude keine tragende Mittelsäule, sodass die Ausförderung des Produkts durch Klappen erfolgt, die im Zentrum der Horde installiert sind.

Der Nachteil dabei ist ein freitragendes Dach, bei einem mehrgeschoßigen Bau, jeweils freitragende Zwischendecken, an die auch die umlaufenden Wender im Zentrum aufgehängt und so mitgetragen werden müssen.

Eine dritte Variante nach dem anderen System, hat eine sich drehende Horde. Hier ist der Wender ortsfest an eine tragende Mittelsäule und an die Außenwand montiert und wie auch die oben beschriebenen Varianten mit einer heb- und absenkbaren Be- und Entladeschnecke ausgerüstet.

Der Eintrag des Weichgutes wie auch der Austrag des Grünmalzes liegen stationär an derselben Stelle und die sich drehende Horde trägt das Produkt beim Beladen weiter und beim Entladen heran und es wird durch eine Klappe entweder in die Mittelsäule oder durch die Außenwand gleich nach außen abgetragen.

Ein Nachteil ergibt sich durch die gegen die Horde schleifende Abdichtung, die unter dem Malzbett liegt und dadurch sich rasch abnutzt und zu Ausfall von Produkt führt, vermehrt noch, wenn diese beschädigt ist, was häufig auftritt.

Das Funktionsprinzip an sich hat sich jedoch als sehr zuverlässig bewiesen.

Nach beiden Systemen sind auch schon mehrfach separate Darren gebaut worden, die auf die Chargengrößen der Keimkästen abgestimmt sind.

Eine vierte Variante, ebenfalls nach dem System mit Drehhorde, ist der "Hauner-Unimälzer". Auch diese Variante war bereits in den sechziger-Jahren entstanden.

Dieser besonderen Rundbauausführung liegt ebenfalls das Saladin-Prinzip zugrunde.

Das System ist vergleichbar ein Keim-/Darrkasten in Rundausführung, mit der Besonderheit einer Drehhorde. Es wird nach dem Keimzyklus auch der Darrzyklus gleich auf der Keimhorde ohne Umlagerung abgefahren. Chargengrößen von über 100 Tonnen wurden zwischenzeitlich nach dieser Variante mehrfach errichtet.

Der Nachteil ist allerdings die Zeitspanne, in der die Horde belegt ist. Diese verlängert sich um die Zykluszeit des Darrens, genau wie bei den linearen Keim-/Darrkästen.

Um eine Wirtschaftlichkeit der Heizanlage für das Darren, das nur zwischen 24 und längstens 36 Stunden dauert, zu erreichen, wurden oft auch mehrere Unimälzer angebunden.

Bei Einführung dieses Systems und in den Kleinmälzereien, die nur den Eigenbedarf kleinerer Brauereien produzierten, wurde vereinzelt keine Weicheinrichtung vorgeschaltet und die erforderliche Produktfeuchte nur durch Sprühbefeuchtung eingestellt.

Darren nach dem Stand der Technik

Die bekannten separaten Darranlagen, früher rechteckig und mit einer Kipphorde, bei großen Darren einer zweiteiligen versehen, um sie rasch wieder beladen zu können, sind heute wegen der riesigen Chargen meist als Rundbau ausgeführt. Die Ausführungen entsprechen den Varianten der oben beschriebenen Keimkästen in den Turmmälzereien, benötigen aber keine Wendespindeln.

Für den gleichmäßigen Auftrag des Keimgutes wie auch zum Austrag des gedarrten Malzes wird eine ebenfalls auf und ab bewegliche Be- und Entladevorrichtung eingesetzt.

Chargengrößen über 200 Tonnen sind keine Seltenheit. Die für Chargen von 200 Tonnen und auch noch darüber, benötigten riesigen Luftmengen, werden von zwei, im Luftverbundsystem auch von drei oder vier großen Ventilatoren geliefert.

Die Prozesswärme wird durch entsprechend dimensionierte mit Gas oder mit Heizöl befeuerte Lufterhitzer bereitgestellt, seltener auch durch Heißwasserradiatoren.

Energieeinsparung nach dem Stand der Technik

Zur Einsparung von Wärmeenergie beim Schwelken und Darren, sind bereits seit vielen Jahren Wärmetauscher mit eingesetzten Glasröhren im Einsatz, um so der feuchtigkeitsgesättigten Abluft Wärmeenergie zu entziehen und die angesaugte Frischluft damit vorzuwärmen.

Die gesättigte Abluft streicht an den Glasröhren vorbei oder auch durch sie hindurch und an dem durch die angesaugte Frischluft, kalten Glasröhren schlägt sich Kondensat nieder, wobei die freiwerdende Wärmeenergie an den Frischluftstrom übertragen wird.

Das Luftverbundsystem zweier Darren, eine weitere Neuerung im Darrbereich, hat sich dazu als hocheffizient gezeigt: Die sehr warme, aber nur teilgesättigte Abluft des Darrzyklus der einen Darre, wird dem Zuluftstrom des Schwelkzyklus einer anderen, zeitversetzt arbeitenden Darre zugeführt.

Die hochgesättigte Abluft, ausschließlich aus dem wechselweisen Schwelkzyklus, wird dann über den Glasrohrwärmetauscher geführt, wo durch die Kondensation der Luftfeuchtigkeit ein hoher Anteil der darin enthaltenen Wärmeenergie zurück gewonnen wird.

Der vorgewärmte Frischluftstrom wird dann über den Lufterhitzer geführt und auf die benötigte Prozesstemperatur nacherhitzt.

Die höchste Effizienz wird dabei bei niedrigen Außentemperaturen erzielt.

Zusammenfassend kann ein einheitlich letzter Stand der Produktionstechnik auf Grund der vielen Systeme nicht festgestellt werden.

Die vielfältigen Varianten der Produktionssysteme sind nach wie vor in Gebrauch, auch bei Neuanlagen.

Nach allen angeführten Systemen wurden bisher noch immer auch neue Produktionsanlagen realisiert und weitere sind weltweit bereits projektiert.

In der Zusammenschau aller bekannten Produktionssysteme ist augenfällig, dass sie alle chargengebunden oder nur teilkontinuierlich produzieren und dass sie selbst mit den verschiedenen zusätzlichen Einrichtungen noch immer der Idee Saladins entsprechen.

Der bekannte Stand der Technik mit chargengebundener Produktionsweise weist jedoch verschiedene Nachteile auf:

Die Produktion verliert infolge der Unterbrechungen durch die Umlagerung der Chargen wertvolle Zeit und führt zu Verlust von Produkt. Dazu ist ein vielfacher Einsatz von Fördergeräten und Personal erforderlich. Weiter bleibt die teure Produktionskette intervallweise ungenutzt. Umso mehr bei den Keim-/Darrkästen wie auch beim "Hauner-Unimälzer"-System.

In den älteren Keimkastenanlagen müssen zur Reinigung die Hordensiebe vielfach auch noch von Hand ausgehoben werden, was eine schwere körperliche Arbeit ist und noch zusätzlichen Zeitverlust bewirkt.

Mit den neu projektierten, zunehmend größeren Produktionsanlagen müssen die Keimkastenwender immer breiter werden und haben deshalb auch immer mehr Wendespindeln und benötigen dafür noch zusätzliche Wendespindelantriebe.

Dazu kommt, dass jeder Wender eine eigene Be- und Entladevorrichtung haben muss, sodass die Investitionskosten wie auch der Unterhaltungsaufwand überproportional steigen.

Um die Zeitverluste in den Umlagerungsphasen in Grenzen zu halten, müssen sehr leistungsstarke Fördergeräte eingesetzt werden, die einen hohen Energieaufwand erfordern.

Soll bspw. eine Charge von 200 Tonnen mit einem Elevator in zwei Stunden weiter transportiert werden, liegt die benötigte Antriebsleistung, je nach Förderhöhe, bei 30 - 50 kW.

Für den Transport des Produkts vom Weichen in die Keimkästen, nass ausgeweicht oder trocken, aus den Keimkästen dann nach der Keimphase auf die Darre und nach dem Darrprozess von hier weiter zu den Silos, werden zudem weitere Fördergeräte mit großer Transportleistung benötigt, die auch intervallweise immer nur kurze Zeit im Einsatz sind.

Wenn nicht mehrere Produktionseinheiten zusammenwirken, stehen sie die Zeiten dazwischen ungenutzt, fallen sie etwa durch Havarie aus, geht in der Produktion bis zu deren erneuten Betriebsbereitschaft weitere Zeit verloren.

Um Ausfälle der Fördergeräte zu kompensieren, müssen dann, wenn möglicher Zeitverlust vermieden werden soll, entsprechend voluminöse Puffersilos möglichst nahe an der Austragstelle vorgehalten werden. Bei den älteren Kippdarren ist das der darunter liegende "Pansen", aus dem heraus mit geringerer Förderkapazität abtransportiert wird, währenddessen die Darre neu beladen werden kann.

Wegen der vielen manuelle Tätigkeiten, die während der Produktion ebenfalls immer intervallweise zu verrichten sind, ist der Personaleinsatz in allen Systemen hoch.

Erschwerend kommt auch noch hinzu, dass die Gewinnung von Personal für diese Arbeiten schon jetzt äußerst schwierig ist.

Für die Behebung der häufigen Störungen ist dazu auch noch spezialisiertes Fachpersonal, wie Maschinenschlosser oder Elektriker mit Kenntnissen in der Steuerungstechnik einzusetzen, die sich vielfach auch nachts in Rufbereitschaft verfügbar halten müssen.

In dieser Ausprägung ist die Kastenmälzerei nach dem Prinzip "Saladin" nicht mehr entwicklungsfähig.

Es ist erkennbar, dass die Wirtschaftlichkeit der Malzproduktion mit den gegenwärtig eingesetzten Produktionssystemen kaum mehr gesteigert werden kann. Einzig die Hinwendung zu immer größeren Produktionseinheiten erbringt noch Zuwächse, damit steigen naturgemäß auch die Investitions- und Unterhaltskosten und auch das Ausfallrisiko. Hinsichtlich des Energieverbrauchs und auch des Personalproblems kann die chargengebundene Malzproduktion den Anforderungen der Zeit nicht mehr genügen.

Diese nachteiligen Gegebenheiten zu beseitigen oder zu verbessern, ist in der chargengebundenen Produktionsweise aber auch nicht mehr möglich.

Der Erfindung ist deshalb die Aufgabe gestellt, die obigen Nachteile zumindest teilweise zu beheben oder zu minimieren.

Beschreibung der Erfindung

Die Aufgabe der Erfindung wird durch die Vorrichtung zur kontinuierlichen Malzproduktion nach Anspruch 1 und dem Verfahren nach Anspruch 9 gelöst. Zweckdienliche Ausgestaltungen ergeben sich aus den abhängigen Ansprüchen.

Die erfindungsgemäße Vorrichtung zur kontinuierlichen Malzproduktion, umfasst

ein Kreisringgebäude, umfassend einen Boden, Wände und eine Decke, die dem Boden gegenüberliegend angeordnet ist,

wobei in dem Kreisringgebäude ein beweglicher Keimkasten angeordnet ist. Der Keimkasten ist kreisringförmig ausgebildet und dazu ausgelegt sich ohne Unterbrechung permanent vorwärts zubewegen. Der Kreisringkeimkasten weist einen Hordenboden und Seitenwände auf. Der Kreisringkeimkasten weist keine Sektionsunterteilung durch Einbauten wie Wände und ähnliches auf. An einer vom Hordenboden abgewandten Oberseite der Seitenwände ist ein Keimkastenwender angeordent. Der Keimkastenwender wird vom Keimkasten mitgeführt und ist zum Kreisringkeimkasten beweglich.

Das erfindungsgemäße Verfahren mittels der obigen Vorrichtung umfasst:

- kontinuierliches Einbringen von Getreide,
- Durchlaufen eines Keimprozesses, und
- kontinuierliches Ausbringen des prozessierten Getreides, insbesondere des darrfertigen Malzes.

Der Vorteil des erfindungsgemäßen Verfahrens und der erfindungsgemäßen Vorrichtung ergibt sich wie folgt:
Von der Chargenproduktion ausgehend, muss einer Charge, die in den zweiten Prozesstag läuft, unmittelbar eine neue Charge folgen, die in den ersten Prozesstag läuft.

Läuft diese in den zweiten Prozesstag, muss ihr wieder eine neue Charge folgen und dieser Ablauf geht immer so weiter: An jedem Tag müsste eine neue Charge in den Produktionsprozess eingebracht werden, bis der Prozesslauf zur Darre gelangt, und zwar unmittelbar einander folgend, praktisch also auf einer Produktionslinie. Es darf nicht eine Charge nach der anderen folgen, sondern es muss permanent entweder Weichgut oder Einweichgetreide in die Produktionslinie eingebracht werden, das dann kontinuierlich den Produktionsprozess durchläuft.

Beispielsrechnung für ein fiktives lineares System (nicht gemäß dieser Erfindung)

Ein Jahresausstoß von 50.000 Tonnen (50.000 t) Malz erfordert etwa 62.500 Tonnen (62.500 t) Rohgetreide.

Unter der Annahme, ein Keim-/Darrkasten, in einer bisher gebräuchlichen linearen Ausführung, ohne eine vorgeschaltete Weiche (Weicheinrichtung), könnte im Jahr 8760 Stunden kontinuierlich produzieren, so ergäbe dies eine Stundenleistung von:

62.500 t /8760 h = 7,135 t/h, an einzubringendem Rohgetreide,

die Belegung sei angenommen 600 kg/m², so sind: 7135 kg/h / 600 kg/m² = 11,9 m²/h, d.h. in Näherung 12 m² Hordenfläche/h erforderlich;

Unter der Annahme:

Die Kastenbreite sei 6,0 m, ergibt sich ein Vortrieb: 12 m²/h: 6 m = 2 m/h.
Bei einem Prozessintervall von 6 Tagen für die Keimphase ohne Weiche ergeben sich 144 Stunden, und zusätzlich 36 Stunden für Schwelken/ Darren/Abkühlen, so ergäbe dies eine

Länge der Horde von:

180 h x 2 m/h = 360 Meter.

Daraus errechnet sich eine Hordenfläche von insgesamt: (Kastenbreite x Kastenlänge) = 6 m x 360 m =2160 m² Hordenfläche.

Selbst wenn vier Keim-/Darrkästen dafür eingerichtet würden, wäre die Länge eines jeden Kastens 90 Meter und auch bei einer Kastenbreite von 10 m anstatt 6 m, wären die Kästen noch immer 54 m lang.

Dazu müsste die Horde, auf der das Grünmalzbett liegt, sich permanent vorwärtsbewegen, also praktisch eine Förderkette, die aus Hordenelementen besteht, die auf der Oberseite mit dem Malzbett vorwärts und leer auf der Unterseite zurückläuft, ein Paternostersystem.

Dieser Umstand erfordert aber zugleich, dass die umlaufende Hordenkette mehr als die doppelte Länge der eigentlichen Nutzfläche hätte, eine starke Längung durch Verschleiß wäre die Folge.

Sollte also eine wirtschaftliche Jahresproduktion erzielt werden, müssten einerseits entweder große Längen der Kästen oder mehrere Kästen nebeneinander gebaut werden.

Andererseits würde die praktische Umsetzung dieser Idee aber eine problembehaftete, nicht handhabbar, aufwendige Technik erfordern.

Der Verschleiß an Antriebs- und Laufwerkstechnik wäre sehr stark und würde alles bisher bekannte weit übertreffen.

Bereits diese beiden Faktoren lassen neben anderen Problembereichen wie Reinigung und Instandhaltung, ein lineares Produktionssystem als nicht praktikabel erscheinen.

Insbesondere sind:

1. die in der Beispielsrechnung ermittelten 360 Meter Länge einer Horde mit einem linearen Keimkasten nicht realisierbar,

2. die Aufteilung auf mehrere Kästen, um eine technisch realisierbare Länge zu erreichen, aus Kostengründen nicht darstellbar,

3. eine nur schwer zu handhabende Technik zu erwarten und

4. bei der ermittelten Hordenfläche auch keine der bewährten Varianten der Turmmälzerei in Betracht zu nehmen, auch nicht bei Aufteilung auf mehrere Keimkästen, da die Wenderspannweiten wie auch die mehrfache Antriebstechnik unverhältnismäßig wäre

5. für jede Einheit ein eigenes Be- und Entladesystem nötig.

Aus diesen Gründen ist eine technische Machbarkeit wie auch eine Wirtschaftlichkeit auszuschließen. Um eine kostenangemessene und wartungsarme Anlage zu konzipieren, mit der diese Faktoren ausgeschaltet bleiben, muss ein anderes Anlagenkonzept entwickelt werden, das sich insbesondere aus den beiden Faktoren nach 1. und 4. ableiten lässt.

Wie sich in der obigen Beispielsrechnung für eine fiktive, lineare Produktionsanlage zeigt, ist für einen permanent, organisch ablaufenden Produktionsprozess eine sehr große Hordenfläche von 2160 m² erforderlich.

Zur Lösung der erfindungsgemäßen Aufgabenstellung müssen deshalb die folgenden Kriterien erfüllt werden.

Um diese Hordenfläche nach 1. herzustellen, braucht es einen sehr großen Durchmesser. Um das Problem einer übermäßigen Wenderspannweite aus 4. zu umgehen, muss die Hordenbreite sehr schmal sein.

Es muss deshalb der Durchmesser der Mittelsäule analog dem zunehmenden Außendurchmesser der Anlage folgen, bis die beiden Forderungen erfüllt sind.

Mit dem zunehmenden Durchmesser der Mittelsäule wird diese zu einem eigenen Bauwerk, welches zusammen mit der Außenwand der Anlage ein Kreisringgebäude entstehen lässt.

Die oben aufgezeigten Kriterien werden mit der erfindungsgemäßen Vorrichtung zur kontinuierlichen Malzproduktion erzielt.

Die erfindungsgemäße Vorrichtung umfasst ein Kreisringgebäude, in dem ein Keimkasten angeordnet ist. Der Keimkasten ist erfindungsgemäß kreisringförmig, d.h. er bildet einen geschlossenen Kreisring. Auf dem Keimkasten ist ein Keimkastenwender angeordnet Die Besonderheit dieser Erfindung ist der schmale, kreisringförmige und mobile Keimkasten, der sich ohne Unterbrechung permanent vorwärtsbewegt und dabei auch die Keimkastenwender mitführt.

Für den oben angenommenen Jahresausstoß von 50.000 Tonnen ergeben sich bei der erfindungsgemäßen Vorrichtung die folgenden Werte:
Die oben ermittelten 360 Meter Länge der Horde ergeben bei sonst gleichen Parametern als Kreisringbauweise einen inneren Durchmesser des Kreisringes von 115 Metern und bei der Kastenbreite von 6 m einen äußeren Durchmesser von 127 Metern.

Bei einem Außendurchmesser von z. B. nur 100 Metern, wäre bei gleicher Hordenfläche von 2160 m², ein Innendurchmesser von rechnerisch 85,15 Metern gegeben, gesetzt 85 Meter. Daraus resultiert eine Kastenbreite von 7,5 m und auch die gleiche Horden- und Wenderbreite

Die Hordenfläche errechnet sich dann auf 2179 m² gegenüber den 2160 m², die für die Jahresproduktion von 50.000 t Malz mit einer kontinuierlich produzierenden Anlage theoretisch erforderlich sind. Somit ergeben sich technisch gut handhabbare Voraussetzungen für die erfindungsgemäße Vorrichtung.

Durch die geringe Breite des Kreisringkeimkastens vermindern sich zum einen die Spannweiten der Keimkastenwender, der Hordenträger. Weiterhin können im Raum unter der Horde, der Unterhordenraum, durch spezielle Trennelemente, die Raumteilerelemente, Raumsektionen gebildet werden, die nur eine geringe Breite benötigen. Zugleich wird die notwendige Länge der Horde durch diese Bauweise hergestellt. Diese Raumteilerelemente sind dazu ausgelegt, einen Übertritt von Prozessluft zwischen benachbarten Sektionen im Unterhordenraum zu verhindern.

Zum anderen umschließt das Kreisringgebäude eine Fläche, auf der vorteilhafter-weise Gebäude zur Unterbringung der peripheren Einrichtungen, wie Büros, Sozialräume und für Lagersilos und deren Nebengebäuden, für die erforderlichen Einrichtungen zur Aufnahme des Getreides, angeordnet werden können. Die Kreisringanlage könnte aber auch um bereits bestehende Betriebsgebäude herum errichtet werden.

Das erfindungsgemäße kontinuierliche Produktionsverfahren produziert Malz in einem permanenten und ununterbrochenen Produktionsablauf.

Der gesamte Produktionsablauf nach diesem Verfahren umschließt sowohl den ganzen, vorgegebenen Keimzyklus, mit oder auch ohne separate Weiche, den ganzen Schwelkzyklus, wie auch den Ausdarrzyklus und die Abkühlphase und an deren Ende auch den permanenten Austrag des gedarrten Malzes, ohne dass das Produkt umgelagert werden musste.

Die Vorrichtung weist insbesondere eine Leerlaufstrecke von 24 Stunden (1 Tag) auf, das heißt einen Bereich, der zwischen Entladung und Beladung nicht beladen ist, in der die Horde unbelegt bleibt. Hier können Reinigungs- oder Reparaturarbeiten ausgeführt werden.

Das heißt: An immer der gleichen Stelle wird in einem immer gleichen, fortlaufenden Transportstrom zur Vermälzung vorbereitetes Getreide in die Produktionsanlage eingebracht, es wird in dem permanent weiterlaufenden, kreisringförmigen Keimkasten ohne Umlagerung mitgeführt und durchläuft mit sehr langsamer Geschwindigkeit, ohne Unterbrechung alle Stadien des tagelangen Produktionszyklus, bis zum Austrag des lagerfähigen Darrmalzes.

Dieses erfindungsgemäße Produktionsverfahren kann in keinem der bekannten Produktionssysteme angewandt werden, es wurde deshalb ein dafür geeignetes Produktionssystem neu entwickelt, das diesen Produktionsablauf ermöglicht.

Ein kreisringförmiger, mobiler Keimkasten, der ebenfalls in einem tunnelartigen Kreisringgebäude mit sehr großen Durchmessern installiert ist, bewegt sich mit langsamer Geschwindigkeit, ohne Unterbrechung, permanent vorwärts.

Die für das Wenden und Auflockern erforderlichen Keimkastenwender werden von dem mobilen Keimkasten mitgeführt.

Die Keimkastenwender haben einen eigenen Vorschubantrieb und fahren dadurch unabhängig von der Laufbewegung des Keimkastens, auf eigenen Laufschienen, die oben auf den Seitenwänden des Keimkastens angebracht sind.

Die Wender sind über die Strecke des Keimzyklus zweckmäßigerweise so aufgestellt, dass sie je eine Tagesstrecke vor sich zu bearbeiten haben.

An der vorgegebenen Einlaufstelle, insbesondere mittels einer Beladevorrichtung, wird Weichgut über eine vorgeschaltete kontinuierlich arbeitende Weicheinrichtung, bspw. mittels einer Einweichschnecke, in einem permanenten Transportstrom mittels peripherer Fördergeräte an die Verteilermaschine übergeben. Die Beladevorrichtung kann die Verteilermaschine umfassen.

Mit dieser speziellen Verteilereinrichtung wird das Weichgut auf die voreingestellte Betthöhe über die ganze Hordenbreite gleichmäßig aufgetragen, währenddessen sich der Kreisringkeimkasten permanent weiterbewegt.

Alle zwölf Stunden fortwährenden Eintrages beginnen die Keimkastenwender, einer nach dem anderen mit dem Wendegang; so wie die Sektionen des Unterhordenraums und damit die Keimtage durchlaufen werden. Währenddessen wird das Produkt ständig mit Prozessluft durchlüftet.

Dieser Ablauf des Wendens und Durchlüftens entspricht dem in den linearen Keimkästen, nach Saladin.

Währenddessen läuft der Keimkasten permanent weiter, Weichgut wird kontinuierlich weiter eingefördert und auf die Horde verteilt und durchläuft nun die zweite, dritte und weiter alle Sektionen des Unterhordenraums, während an der Einlaufstelle fortlaufend weiter Weichgut auf die Horde aufgetragen wird.

Nach weiteren zwölf Stunden, beginnen die Wender erneut mit ihren Wendegängen im sogenannten Pilgerschrittrythmus, von der Position aus, in die sie ruhend, auf den Laufschienen mitgetragen worden waren.

Nach dem Wendegang schalten sie ab und werden ruhend wieder vom Keimkasten zwölf Stunden lang mitgetragen, von wo sie dann erneut einen Wendegang beginnen. Die genannten Zeiten sind beispielhaft und können durch den Fachmann angepasst werden.

Die Wenderlaufstrecke wird zweckmäßigerweise durch Sensoren begrenzt, die fest an einer Gebäudewand oder an der Decke positioniert sind. Die Sensoren sind so eingestellt, dass die Wenderstrecken sich kurz überschneiden, wodurch das Keimgut gleichmäßig durchlüftet wird und damit keine Spatzenbildung entsteht. Insbesondere ist in der vorliegenden Vorrichtung keine komplizierte Abstimmung der Wender an eine Profilierung von Stirnseiten von Keimkästen notwendig, da gemäß der vorliegenden Erfindung der Kreisringkeimkasten keine sektionsunterteilenden Wände aufweist.

Nach weiteren zwölf Stunden und dann immer weiter im Zwölfstundentakt, beginnen erneut die Wendegänge. Das zuerst aufgetragene Weichgut erreicht nun als fertiges Grünmalz die erste Sektion des Darrzyklus.

Im Bereich des Darrzyklus entfällt weiteres Wenden. Das Grünmalz durchläuft nun mit der gleichen Laufgeschwindigkeit des kreisringförmigen Keimkastens, auch Kreisringkeimkastens genannt, alle Schwelk-/Darrsektionen, die nach dem vorgegebenen Schwelk-/Darrprogramm im Unterhordenraum durch die speziellen Raumteiler eingerichtet sind.

Diese bilden das Temperaturschema des Schwelk-/Darrprogrammes ab.

Daran schließt sich die Kühlungsstrecke an, an deren Ende der Malzaustrag erfolgt. Hierzu ist zweckmäßigerweise eine Entladevorrichtung, insbesondere ortsfest, vorgesehen.

An der Austragstelle, die nur eine Tagesstrecke (die Leerlaufstrecke) von der Einlaufstelle entfernt liegt, wird jetzt nach dem gänzlich durchlaufenen Produktionszyklus, darrfertiges Malz aus dem kreisringförmigen Keimkasten kontinuierlich ausgefördert und zur Weiterbehandlung an die anschließenden Förderwege übergeben.

Der Umlaufzyklus ist erst nach dem vollständigen Umlauf des Keimkastens einschließlich des zu durchlaufenden Leerbereichs von einer Tagesstrecke, gänzlich abgeschlossen.

Dieser Ablauf wiederholt sich endlos, das heißt: Die Anlage produziert kontinuierlich Malz, bis sie willentlich oder infolge höherer Gewalt außer Betrieb gesetzt wird.

Danach durchläuft das Produkt im peripheren Bereich der Produktionsanlage dann weiter kontinuierlich die Entkeimungs- und Reinigungsstrecke, von wo es direkt in die Verladesilos oder in die Lagersilos transportiert wird.

Mit der erfindungsgemäßen Vorrichtung zur kontinuierlichen Malzproduktion ist es, ähnlich wie beim "Hauner-Unimälzer" möglich, auch ohne separate Weiche und ohne separate Darre, eine Malzproduktion in Betrieb zu setzen.

Es ist ausreichend, das zur Vermälzung vorbereitete Getreide mittels einer Waschschnecke, in einem permanenten Förderstrom der Anlage zuzuführen und den für den Prozess notwendigen Endfeuchtegehalt durch Besprühen mit Wasser zu erreichen.

In diesem Fall muss jedoch eine Verlängerung der Durchlaufzeit im Keimkasten in Kauf genommen werden, die ansonsten in separaten Weichen vorausläuft.

Der vorliegenden Betrachtung liegt ein solches Produktionsschema mit einem 6 Tage Keimzyklus bereits zugrunde.

In einer Ausführungsform kann durch einen späteren Zubau einer ebenfalls kontinuierlich arbeitenden Weicheinrichtung allerdings dieser Nachteil wieder aufgehoben werden und die Zykluszeit verkürzt sich um so viele Tage, wie sie nunmehr in der separaten Weiche aufgewendet werden.

Das gleiche trifft auch zu, wenn eine zusätzliche separate, kontinuierliche Darre zugebaut wird. Dadurch verkürzt sich die Zykluszeit nochmals um die ersparte Zeit des Keim-Darrzyklus und die Produktionsleistung der Anlage wird gesteigert.

Durch die kontinuierliche Produktionsweise werden alle benötigten peripheren Komponenten auf sehr vorteilhafte Kleindimensionen beschränkt, sowohl auf der Seite der Zuführung von Rohware wie auch beim Abtransport des Darrmalzes.

Dasselbe gilt auch bei der weiteren Bearbeitung, wie Entkeimung, Reinigung, Polierung und für die Staubabsaugungs- und Filtereinrichtungen.

Bspw. genügen bei einer Anlagenjahresleistung von 50.000 Tonnen Malz Förderwege und Reinigungsmaschinen mit einer Kapazität von 10 t/h für die Weiterbearbeitung des Stundenausstoßes von 6 t/h an Darrmalz.

Kurzbeschreibung der Zeichnungen

Fig. 1　zeigt ein erfindungsgemäßes Kreisringgebäude der Vorrichtung zur kontinuierlichen Malzproduktion;

Fig. 2　zeigt einen Querschnitt durch einen Kreisringkeimkasten der Vorrichtung zur kontinuierlichen Malzproduktion; und

Fig. 3　zeigt eine Ausschnittsvergrößerung im Bereich der Lagerung des Keimkastenwenders.

Die Zeichnungen sind schematische Darstellungen ohne Maßstab. In den Zeichnungen sind gleiche Teile mit gleichen Bezugszeichen dargestellt. Die Zeichnungen sind lediglich eine beispielhafte, nicht einschränkende Ausführungsform der Erfindung.

Beschreibung der Zeichnungen

Kreisringgebäude

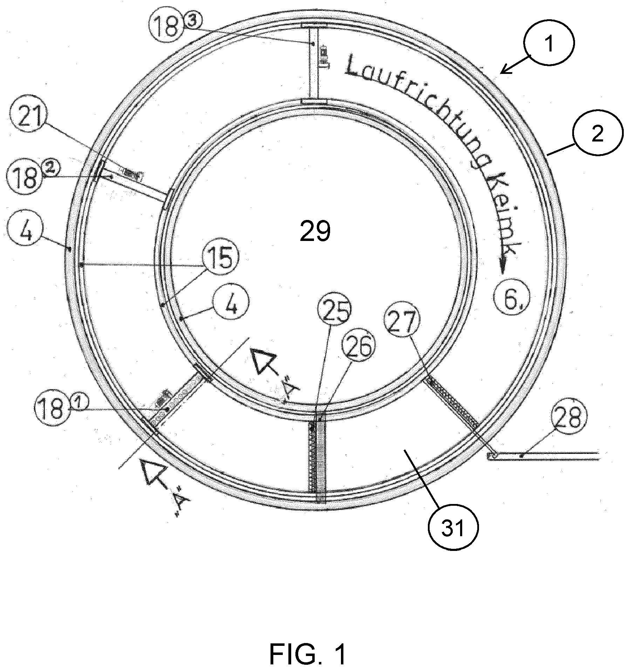

Fig. 1 zeigt die Vorrichtung 1 zur kontinuierlichen Malzproduktion. Diese umfasst ein Kreisringgebäude 2. Das Kreisringgebäude 2 ist ein nicht unterbrochener Kreisring von großem Durchmesser. Dieses weist einen kreisförmigen Boden 3, und eine kreisförmige Decke 5 auf, sowie zylindrische Wände 4. Boden 3, Wände 4 und Decke 5 umschließen einen tunnelartigen, kreisringförmigen Innenraum.

In seinem tunnelartigen Innenraum ist ein Keimkasten 6 installiert, der ebenfalls aus einem kompletten, nicht unterbrochenen Kreisring besteht.

Das Kreisringgebäude 2 kann als Stahlbau oder in Massivbauweise errichtet sein und wird aus wärmeisolierenden Werkstoffen ausgeführt oder mit Isolierstoffen gegen Wärmeverlust und Klimaeinflüsse geschützt.

Boden 3, Wände 4 und Decke 5 des Innenraumes sind zweckmäßigerweise, mit nicht rostendem Blech, wasserdicht verkleidet. Ist das Gebäude aus Mauerwerk oder Beton errichtet, kann die Oberfläche auch mit einem sicher dichtenden Farbüberzug versehen sein.

Die Anlage ist so groß dimensioniert, wie es der zu konzipierende Jahresausstoß erfordert, so dass der Zweck, diese Produktionsmenge an Malz herzustellen, erreicht werden kann.

Das Kreisringgebäude 2 kann eingeschoßig oder auch mehrgeschoßig ausgeführt werden, wobei jedes Geschoß eine selbständige Produktionseinheit bildet.

Das Kreisringgebäude 2 kann auf Stützpfeiler aufgebaut sein, damit es hoch-genug über dem befestigten Gelände liegt, sodass die Durchfahrhöhe für schwere Transportfahrzeuge, evtl. Bahnwaggons, hergestellt ist, um einen Innenbereich 29 nutzen zu können, welcher von der inneren Wand 4 des Kreisringgebäudes in Umfangsrichtung begrenzt wird.

Für die Funktionalität der Anlage hat dies jedoch keine Bedeutung. Auch der Raum unter diesem Kreisring hat keine besondere Bestimmung und kann zur Errichtung beliebiger Betriebsgebäude genutzt werden, wenn der Kreisring, d.h. der Boden 3 und die Wände 4 nicht in Erdbodennähe direkt auf den Fundamenten sitzt.

Wenn die Grundstücksbeschaffenheit es anbietet, kann die Durchfahrt in den von dem Kreisringgebäude 2 umschlossenen Innenbereich 29 auch durch eine Untertunnelung hergestellt werden und das Kreisringgebäude 2 in Bodennähe auf Fundamente gesetzt sein.

Keimkasten

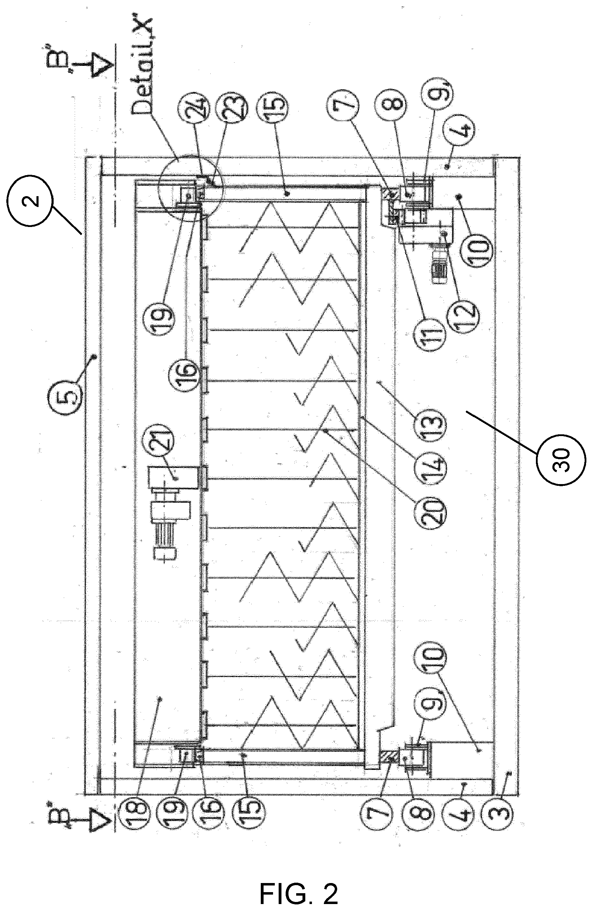

Im Kreisringgebäude 2 ist ein mobiler, kreisringförmiger Keimkasten 6 angeordnet, welcher in Fig. 2 im Querschnitt dargestellt ist. Der mobile Kreisringkeimkasten 6 weist einen Hordenboden 14 und Seitenwände 15 auf, welche sich insbesondere senkrecht vom Hordenboden 14 erstrecken. Der mobile Kreisringkeimkasten 6 weist keine Sektionsunterteilung in Umlaufrichtung auf, um einen kontinuierlichen Prozess zu ermöglichen.

Der mobile Kreisringkeimkasten 6, der im Querschnitt einem nach oben offenen "U", insbesondere eckigem "U" gleicht, ist eine verwindungssteife Konstruktion aus Metallprofilen. Die Seitenwände 15 sind innen zweckmäßigerweise mit rostfreiem Blech ausgekleidet.

Den Boden des Keimkastens bildet der Hordenboden 14 aus Siebelementen, die zu der Kreisringfläche, mit den Hordenträgern 13 fest verschraubt sind.

Auf den beiden Seitenwänden 15, insbesondere einer oberen Fläche der Seitenwände 15, liegen die Laufschienen 16 für die Keimkastenwender 18 auf angeschweißten Kontaktplatten auf und sind mit diesen fest verschraubt.

Der Keimkasten 6 bewegt sich beim Produktionsprozess permanent in die gleiche Richtung vorwärts. Unter seinen Seitenwänden 15 ist er dazu auf je einem inneren und einem äußeren kreisringförmigen Laufring 7 aufgesetzt, welche auf einem Laufwerk aus vielen Laufrollen 8 aufliegen. D.h. der Laufring 7 ist mit dem Kreisringkeimkasten 6 verbunden. Ein Rollenlaufwerk mit vielen Laufrollen 8 ist ortsfest im Kreisringgebäude angeordnet und der Keimkasten 6 mit dem Laufring 7 werden auf dem Rollenlaufwerk vorwärts bewegt.

Die Seitenwände 15, insbesondere eine verwindungssteife Konstruktion aus Profilstahl, verzinkt oder aus Edelstahlprofilen gefertigt und/oder innenseitig mit Edelstahlblech verkleidet, sind die tragenden Elemente des Kreisringkeimkastens. Sie sind insbesondere mit Konsolringen fest verschraubt, die an die Laufringe 7 angeschweißt sind.

Direkt über den Laufringen 7 ist der Hordenboden 14 zwischen die Seitenwände 15 des Keimkastens 6 eingesetzt.

Je nach zu kalkulierender Schütthöhe des Keimgutes haben die Seitenwände 15 des Keimkastens 6, über dem Hordenboden 14 insbesondere eine Höhe von 1,5 Meter bis zu 2,5 Meter.

Oben, auf den Seitenwänden 15 sind die entsprechend deren Radius ebenfalls gebogenen Laufschienen 16 für die Keimkastenwender 18 auf angeschweißten Kontaktplatten aufgelegt und mit diesen fest verschraubt.

### Rollenlaufwerk

Unter dem Keimkasten 6 ist ein Rollenlaufwerk angeordnet. Das Rollenlaufwerk ist im Kreisringgebäude 2 auf den Boden 3 aufgesetzt und umfasst die Laufrollen 8.

Die Laufrollen 8 aus verschleißfestem Material, sind mit ihren Achsen in Rollenböcke 9 eingesetzt.

Die Achsen der Laufrollen 8 sind zweckmäßigerweise an beiden Kopfenden zu einer Vierkantschlüsselfläche gefräst und damit in die Seitenteile der Rollenböcke 9 eingesetzt.

Die Seitenteile der Rollenböcke 9 weisen dazu ebenfalls Vierkantdurchbrüche mit dem gleichen Schlüsselmaß auf. Die Seitenteile sind mit Konsolen fest verschraubt und bilden mit diesen zusammen die Rollenböcke 9.

Die Konsolen sind auf Stützen 10 gesetzt und an den Wänden 4 des Kreisringgebäudes 2 in gleichen, Abständen auf den ganzen Umfang des inneren und äußeren Laufringes 7 verteilt.

Die Stützen 10 sind mit den Wänden 4 des Kreisringgebäudes fest verbunden.

Die beiden Laufringe 7 des Keimringkastens sind aus gebogenen Stahlprofilen gefertigt, wobei der Biegeradius sich aus dem Durchmesser der konzipierten Produktionsanlage, Vorrichtung 1, ableitet.

Sie werden aus Segmenten zu vollständigen Kreisringen zusammengesetzt und tragen den aufgesetzten Keimkasten 6.

Auf den Laufringen 7 liegen auch die Hordenträger 13 auf, die einen Unterhordenraum 30 überspannen und mit denen auch der Hordenboden 14 fest verschraubt ist.

Für den Vortrieb des Keimkastens 6 ist an einem der beiden Laufringe 7 ein Konsolring angebracht, an den Zahnstangen 11 angeschraubt sind, in welche die Zahnräder von Vorschubantrieben 12 eingreifen.

### Unterhordenraum

Die Hordenträger 13, überbrücken den Unterhordenraum 30 und sind innen und außen auf die beiden Laufringe 7 aufgelegt und sind mit diesen fest verbunden, z.B. verschraubt. Sie tragen den Hordenboden 14, der mit den Hordenträgern 13 zu einem festen Plateau verbunden, insbesondere verschraubt, ist.

Im Unterhordenraum 30 sind insbesondere nicht dargestellte Raumteilerelemente angeordnet, welche sich insbesondere vom Boden 3 des Kreisringgebäudes 2 nach oben erstrecken. Die Raumteilerelemente können insbesondere verschiebbar sein und teilen den Unterhodenraum in mehrere Sektionen auf.

An der Unterseite der Hordenträger 13 sind elastische Dichtelemente befestigt, insbesondere angeschraubt, welche dazu ausgelegt sind, den Übertritt von Prozessluft in eine jeweils benachbarte Sektion zu verhindern, indem sie über Raumteilerelemente hinwegstreifen.

### Hordenboden

Den Boden des kreisringförmigen Keimkastens 6 bildet der Hordenboden 14. Er ist im unteren Bereich auf der Höhe direkt über den Laufringen 7, zwischen die Seitenwände 15 des Keimkastens 6 eingesetzt und mit diesen fest verbunden, insbesondere verschraubt. Der Hordenboden 14 besteht aus einzelnen Hordensieben, die untereinander zu Hordensegmenten verbunden, z.B. verschraubt werden können. Die Hordensiebe werden zusammen mit den Hordenträgern 13 verschraubt, so dass sie eine Kreisringfläche bilden.

Die Hordensiebe sind aus perforierten Siebblechen oder vorzugsweise aus Spaltsieben gefertigt, die auf konturierte Profilrahmen aufgeschweißt werden.

Sie können aus verzinktem Stahl, besser aber aus Edelstahl hergestellt werden.

Keimkastenwender

Auf dem Kreisringkeimkasten 6 sind Keimkastenwender 18 angeordnet.

Die Keimkastenwender 18 entsprechen in ihrer Ausführung dem klassischen "Saladin-Keimkastenwender" und bewerkstelligen genauso das Wenden und das Auflockern des Keimgutes durch die spiralförmigen Wendespindeln 20.

Es ist das besondere Merkmal der erfindungsgemäßen Vorrichtung 1, dass die Keimkastenwender 18 von dem sich permanent vorwärts bewegenden Keimkasten 6 mitgetragen werden.

Durch eigene Antriebe 21 fahren diese beim Wenden, einmal in Laufrichtung des Kreisringkeimkastens und beim nächsten Wendegang entgegengesetzt. Die Arbeitsstrecke der Wender wird durch Sensoren begrenzt, die jeweils fest an einer Wand 4 oder der Decke 5 des Kreisringgebäudes 2 installiert sind.

Die Keimkastenwender 18 fahren beim Wendegang völlig unabhängig von der permanenten Laufbewegung des Keimkastens.

Für den Vortrieb der Keimkastenwender 18 greifen Vorschubzahnräder in Zahnstangen ein, die auch bei dieser Kreisringausführung an die Laufschienen 16 angeschraubt sind.

Die Laufschienen 16 sind die Laufbahn für die Keimkastenwender 18. Ihr Radius entspricht dem der inneren, bzw. der äußeren Seitenwand 15 des Keimkastens.

Die Laufschienen 16 aus gebogenen Stahlprofilen liegen zweckmäßigerweise auf angeschweißten Kontaktplatten, auf der Oberkante der Seitenwände 15 auf und sind mit diesen fest verbunden, z.B. verschraubt. Auf der Oberseite der gebogenen Profile, ist als Verschleißschutz 17 ein Flachprofil aus verschleißfestem Material angebracht, welches als Lauffläche für die Keimkastenwender 18 dient.

Im Unterschied zum gestreckten "Saladin-Keimkasten", mit geraden Laufschienen, müssen die Wender hier auf leicht gekrümmten Laufschienen 16 laufen, wodurch sie eine Differentialgeschwindigkeit, von der äußeren zur inneren Laufschiene 16 aufweisen. Die Differentialgeschwindigkeit wird durch unterschiedliche Zähnezahlen der Zahnstangen oder durch ein Ausgleichsgetriebe angepasst.

Der Antrieb des mobilen Kreisringkeimkastens 6 erfolgt durch mehrere Vorschubantriebe 12, welche Getriebemotoren umfassen, und über Zahnstangen 11, welche an einen Konsolring angeschraubt sind; dieser ist seitlich an einem der beiden Laufringe 7 angeschweißt.

Die Bewegungsgeschwindigkeit des kreisringförmigen Keimkastens 6, der einen Umfang von zweihundert Metern oder mehr aufweisen kann, ist dabei äußerst langsam, sodass er sich in der Zeit des gesamten Produktionszyklus, zusammen mit einer vorbestimmten Leerlaufstrecke, nur eine Umdrehung dreht.

Es ist ein besonderes Merkmal der erfindungsgemäßen Vorrichtung zur kontinuierlichen Malzproduktionen, dass der Unterhordenraum 30 eine wichtige Funktion als Serviceraum für Reparaturarbeiten hat, z. Bsp. zum Austausch von Laufrollen 8 im laufenden Betrieb.

Diese anfallenden notwendigen Arbeiten können gefahrlos während des ununterbrochenen Produktionsbetriebes ausgeführt werden, wie auch die turnusmäßigen, üblichen Reinigungs- und Servicearbeiten.

Der Unterhordenraum 30 ist zweckmäßigerweise begehbar und hat in dieser Ausgestaltung eine Höhe von mindestens zwei Metern vom Boden 3 des Kreisringgebäudes 2 bis unter die Hordenträger 13.

Sektioneneinteilung

Wie beim klassischen Saladin-Kasten, wo diese Höhe nur etwa 0,5 m bis 1,0 m beträgt, dient der Unterhordenraum auch als Luftkanal zur Zuführung der Prozessluft und ist dafür in Sektionen, insbesondere Tagesstrecken, des kontinuierlichen Produktionsprozesses unterteilt.

Die Unterteilung des ringförmigen Unterhordenraums 30 in Sektionen erfolgt insbesondere mittels spezieller, leichter Raumteiler, die in ihrer Positionierung veränderbar sind.

Die Raumteiler verhindern auch den Übertritt von Prozessluft in die jeweils benachbarten Prozesssektionen, weil dort jeweils unterschiedliche Temperaturen eingestellt sein können.

In einer Ausführung ist jede Sektion ein Tagesbereich des Keimprozesses, der in dem umlaufenden Kreisringkeimkasten kontinuierlich abläuft.

Die Aufteilung kann aber in beliebige Sektionen verändert werden, z.B. für die Produktion von Spezialmalzen.

Eine eigene Zugangstüre, welche in einer der Wände 4 des Kreisringgebäudes angeordnet ist, führt zweckmäßigerweise in die jeweiligen Sektionen, sodass sie jederzeit begehbar sind. In einem Schwelk-/Darrbereich ist wegen des dort höheren Luftdrucks noch zusätzlich eine Druckausgleichsschleuse an den Türen vorgebaut.

Ventilatoren

Ein jeweils eigener Ventilator liefert nach Bedarf im Keimbereich die automatisch konditionierte Prozessluft in jede Sektion des Unterhordenraums 30. Zu deren Temperaturführung während der wärmeren Tageszeiten, ist zweckmäßigerweise eine externe Kälteanlage in einem Nebengebäude installiert, die mit den Kühlregistern im Luftkanal verbunden ist. Über Frequenzkonverter können die Drehzahlen der Ventilatoren verändert und automatisch auf den Bedarf eingeregelt werden.

Sektionen im Schwelk-/Darrbereich

Zweckmäßigerweise ist im Bereich des Schwelk-/Darrprozesses die Unterteilung der Sektionen so eingerichtet, dass sie den Zeitlauf des anzuwendenden Temperaturschemas abbildet. Jede Sektion des Schwelk-/Darrzyklus ist jeweils mit einem eigenen Ventilator ausgerüstet, der die entsprechend konditionierte Prozessluft einbläst.

Beheizung von Schwelke und Darre

Mit Lufterhitzern wird die Prozessluft auf die erforderliche Temperatur aufgeheizt. Sie können mit Gas oder mit Heizöl befeuert werden. Auch durch Heißwasserregister, oder auch durch elektrische Heizregister kann die Prozessluft erhitzt werden.
Die Steuerung der Temperatur erfolgt automatisch gemäß eines Darrprogramms.
Durch Temperaturfühler, die zweckmäßigerweise in den jeweiligen Sektionen installiert sind, wird die Temperatur im Unterhordenraum wie auch über dem Malzbett ständig überwacht und geregelt.

Weichquttransport

Über periphere Transportmittel, wie Förderschnecke oder Kettenförderer, wird permanent zur Vermälzung vorbereitetes Getreide herangeführt und eine vorgeschaltete, kontinuierlich arbeitende Weicheinrichtung, bspw. eine Einweichschnecke stellt den permanenten Zustrom von Weichgut sicher.

Beladevorrichtung

Die Beladevorrichtung 25 ist eine Auftrags- und Verteilereinrichtung; sie ist ortsfest im Kreisringgebäude 2 installiert.
Die permanente Einbringung des Weichgutes in die Vorrichtung - Produktionsanlage - erfolgt immer an derselben Stelle, an der im Kreisringgebäude 2 eine Beladevorrichtung 25 ortsfest installiert ist, wie in Fig. 1 dargestellt.
Sie bewirkt die Verteilung des permanenten Zustromes von Weichgut zu einem geschlossenen Bett im kreisringförmigen Keimkasten 6. Eine Förderschnecke befördert das Weichgut auf eine Schütte, von der es über die ganze Breite auf den Hordenboden 14 verteilt wird.
Zur Einstellung verschiedener Betthöhen wird sie über einen Verstellmechanismus in der Höhenlage verändert. Durch optionale Sensoren wird der Weichgutzustrom erfasst und die Höheneinstellung entsprechend nachjustiert. An der Einrichtung ist zweckmäßigerweise für Wartungsarbeiten ein Bediensteg 26 angebracht.

Energieeinsparung durch Wärmerückgewinnung beim Darren

Zweckmäßigerweise wird durch eine bekannte Methode zur Energieeinsparung mittels eines Glasrohrwärmetauschers der Wasserdampf gesättigten Abluft aus dem Schwelkprozess ein Großteil der Wärmeenergie entzogen und an den Frischluftzustrom übertragen, bevor dieser, zusammen mit der zurückgeführten Darrabluft, über die Heizelemente auf die benötigte Prozesslufttemperatur erwärmt wird.

Luftverbundsystem

Eine weitere Möglichkeit zur Einsparung von Heizenergie ist das Luftverbundsystem zweier oder auch mehrerer Darren. Dieses ist ebenfalls eine bekannte Methode mit sehr hoher Effizienz.
Über ein Luftkanalsystem wird die sehr warme, aber ungesättigte Abluft der Ausdarrphase einer Darre zur weiteren Nutzung in die Schwelkluftzuführung einer anderen eingespeist und auf diese Weise die ungenutzte Wärmeenergie der Darrabluft wieder als Prozesswärme in den Schwelkbetrieb eingebracht.
Ein besonderer Vorteil wird mit dem neuartigen System des Kreisringkeimkastens 6 dadurch erreicht, dass die beiden Sektionen des Schwelk- und des Darrzyklus auf derselben Horde dicht hintereinander liegen und somit dieser Luftverbund durch kurze Kanalführungen sehr einfach herzustellen ist.

Weitere Nutzung der Abluft

In einer weiteren Ausgestaltung wird aus dem feuchten, gesättigten Abluftstrom nach dem Glasrohrwärmetauscher eine sonst nicht weiter rekuperierbare Wärmemenge, während der Wintermonate zur Vorwärmung des Einweichgetreides verwendet.
Die Feuchtigkeit der gesättigten, warmen Schwelkabluft schlägt sich auf dem kalten Getreide nieder und führt auf diese Weise bereits zu einer gewissen Wasseraufnahme und Erwärmung.
Die räumlich sehr nahe an den Zuführwegen des Getreides liegende Schwelksektion, mit dem darüber angeordneten Glasrohrwärmetauscher, bietet diese Möglichkeit.

Kondensatsammelbecken

Das im Glasrohrwärmetauscher ausfallende Kondenswasser wird zweckmäßigerweise einem Sammelbecken zugeführt und wird zu Reinigungszwecken wieder verwendet.

Austrag des Darrmalzes

In der weiteren Ausgestaltung umfasst die Vorrichtung 1 eine Entladevorrichtung 27, die im Kreisringgebäude 2 nach der Sektion für das Abkühlen des Malzes ortsfest installiert ist. Sie fördert das Darrmalz aus und übergibt es an periphere Transportmittel 28 zur weiteren Behandlung.

Indem das Darrmalzbett oft nicht in sich zusammenfällt, wenn nur von unten abgetragen wird und somit eine Aufstauung entsteht, die unregelmäßig zusammenfällt, werden in einer Ausgestaltung vor einem Trägerschild drei Förderschnecken mit kleinem Durchmesser installiert, die übereinander angeordnet sind.

Diese führen das Darrmalz einer Schrägschnecke zu, die es über die Seitenwand 15 des Kreisringkeimkastens 6 hinausfördert und an immer selber Stelle an periphere Transportmittel 28 übergibt.

Eine zweckmäßigerweise angebaute Staubabsaugung zieht den entstehenden Malzstaub ab und führt ihn einer Beiproduktverarbeitung zu.

In Laufrichtung nach der Entladevorrichtung beginnt ein Leerlaufbereich 31 der Horde 14, indem Servicearbeiten ausgeführt werden können.

Indem die Horde 14 hinter dem Trägerschild der Entladevorrichtung 27 immer leer ist und somit begehbar, ist hier ein Bediensteg nicht erforderlich.

## Leerlaufbereich

In dem Leerlaufbereich, der unmittelbar hinter der Entladevorrichtung 27, auch Austragsvorrichtung, anschließt und eine Tagesstrecke, von 24 Stunden lang ist, werden die üblichen Reinigungsarbeiten auf und unter der Horde 14 getätigt. Unter "einer Tagesstrecke lang" wird ein Kreissegment verstanden, dass in einem Tag vorwärts bewegt wird.

Dazu können auch eventuell notwendige Reparatur- oder Ersatz- und Austauscharbeiten am Hordenboden 14 oder an den Abdichtungen 23, ohne Unterbrechung des kontinuierlichen Produktionsbetriebes ausgeführt werden.

Somit muss die Vorrichtung nicht regelmäßig stillgesetzt werden und Produktionsverluste werden deutlich verringert.

Durch die Besonderheit dieser Erfindung, dass der ganze Keimkasten 6 umläuft, treten keine Spalten zwischen den mit dem Hordenboden 14 fest verschraubten Seitenwänden 15 und zwischen den miteinander verschraubten Hordensieben auf. Somit werden Verluste an Produkt infolge von Undichtigkeiten im Bereich der Horde vermieden.

Auch einen Auswurf von Produkt, wie er vielfach bei klassischen Keimkästen an deren Kopfenden zu sehen ist, wird vermieden.

## Abdichtungen

Um Verluste von Prozessluft zu verhindern, sind auch an den Seitenwänden 15 des Keimkastens zweckmäßigerweise Abdichtelemente 23 aus Elastomeren angeschraubt, die mit dem Keimkasten 6 umlaufen.

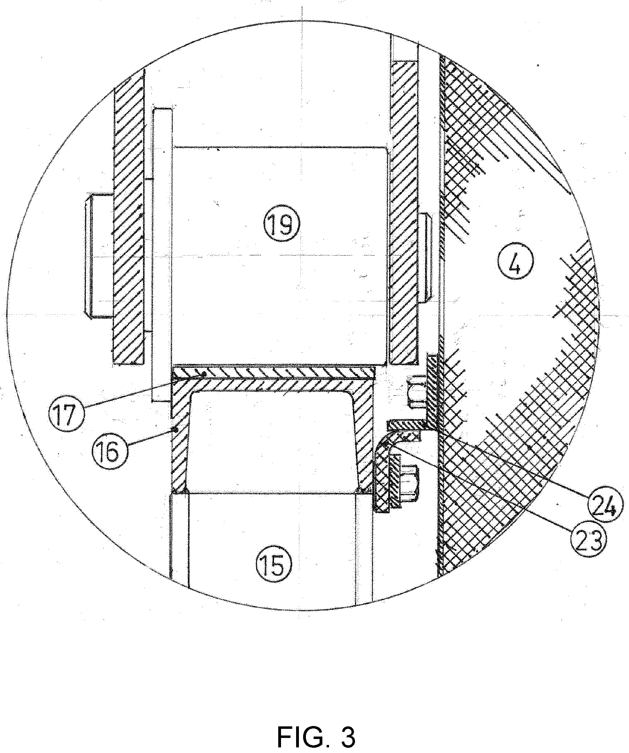

Die Abdichtelemente 23 sind insbesondere in Fig. 3 dargestellt. Sie schleifen an austauschbaren Schleifflächen 24, die an die Gebäudewände 4 angeschraubt sind.

Dadurch verschließen sie die Zwischenräume zwischen den Seitenwänden 15 des sich vorwärts bewegenden Kreisringkeimkastens 6 und den Gebäudewänden 4 und verhindern die Verluste von Prozessluft.

Die erfindungsgemäßen elastisch-schleifenden Abdichtungen 23 dieser Ausgestaltung liegen außerhalb des produktberührten Bereiches. Produktverluste infolge schadhafter Dichtungen können an dieser Stelle nicht auftreten. Auch die Verschleißlast an den Abdichtungen 23 ist um ein Vielfaches geringer. Hinzu kommt, dass diese Abdichtungen während des fortwährenden Produktionsbetriebes ausgetauscht werden können.

## Service- und Reparaturarbeiten während des Produktionsbetriebes

Ein weiterer Vorteil der erfindungsgemäßen Vorrichtung 1 ist, dass sämtliche notwendigen Reparatur- und Teileersatzarbeiten gefahrlos ohne Betriebsunterbrechungen ausgeführt werden können.

Das heißt: Die Anlage kommt nach Inbetriebsetzung wegen Prozessualer oder technischer Vorfälle nicht mehr zum Stillstand, außer sie wird durch höhere Gewalt oder willentlich stillgesetzt.

## Produktionserweiterung durch späteren Zubau einer Weiche

In einer Ausführungsform ist ein späterer Zubau und die Einbindung einer separaten, kontinuierlichen Weicheinrichtung, abgesehen von der kurzzeitigen Unterbrechung zur Anpassung der Umlaufgeschwindigkeit, mit keinerlei Einschränkungen des Produktionsablaufes verbunden. Ein solcher Zubau vergrößert die Produktionsleistung der Anlage dann um die eingesparte Zeit der Weichphase.

Da sich die Umlaufzeit jetzt um die eingesparte Zeit des Weichens und der ebenfalls verkürzten Darrphase vermindert, ist es erforderlich die Umlaufgeschwindigkeit zu erhöhen, sodass der Keimkasten 6 in der nun kürzeren Zykluszeit eine ganze Umdrehung umläuft. Entsprechend ist das Übersetzungsverhältnis des Antriebs 12 des Keimkastens z. B: von "I1 " zu " I2 ", d.h. von einem ersten Übersetzungsverhältnis zu einem zweiten Übersetzungsverhältnis, zu verändern.

Zur Erhöhung der Umlaufgeschwindigkeit werden die Riemenscheiben vom Elektromotor und vom Reduziergetriebe ausgetauscht.

Für die Phase des Einweichens auf der Horde - Hordenboden 14 des ringförmigen Keimkastens 6 - sind in einem beispielhaften Produktionsschema zwei Tage = 48 h angesetzt. Die entsprechende Umlaufzeit von 204 h verkürzt sich somit durch den Wegfall der Weichzeit auf 156 h. Durch die schnellere Umlaufgeschwindigkeit verkürzt sich jetzt auch die Durchlaufzeit des ringförmigen Keimkastens 6 durch die im Unterhordenraum 30 durch die Raumteilerelemente vorgegebenen Sektionen der Schwelk-/Darrphase von vorher 36 h, auf dann 27,5 h. Um die erforderliche Trocknungsleistung in dieser kürzeren Zeit zu erreichen, wird die Leistung der Ventilatoren entsprechend erhöht. Bei guter Vorbereitung dieser Umbaumaßnahme, liegt der hierfür benötigte Zeitrahmen unter einer Arbeitsstunde, in der der permanente Betrieb unterbrochen werden muss.

Die Zuführung des Weichgutes erfolgt weiterhin auf die gleiche Weise wie vorher, auch die Verteilung im ringförmigen Keimkasten 6, jedoch mit einer schnelleren Zuführung.

Zubau einer separaten kontinuierlich arbeitenden Darre

In einer Ausführungsform kann die Vorrichtung mit dem späteren Zubau einer zusätzlichen Darre noch weiter ausgebaut und die Produktivität damit nochmals erhöht werden.

Im Unterschied zu der Vorschaltung eines kontinuierlichen Weichsystems, ist jedoch für die Einbindung einer separaten Darre, obgleich diese ebenfalls in kontinuierlicher Betriebsweise arbeitet, eine längere Produktionsunterbrechung erforderlich.

Indem jetzt die ganze Kreisringfläche der Horde, mit Ausnahme der Leerlaufzeit/- Leerlauffläche ausschließlich für den Keimzyklus genutzt, dieser aber zeitlich nicht verlängert wird, muss die Umlaufgeschwindigkeit des Keimkastens 6 nochmals erhöht werden.

Der Vorgang ist genau gleich wie beim Umbau für eine separate Weiche. Wesentlichen Komponenten für den Schwelk-/Darrzyklus, das sind die Ventilatoren und die Heizanlage, können in der separaten Darre weiterverwendet werden, wenn sie hierfür umgebaut werden.

Dafür ist eine entsprechende Umrüstzeit erforderlich.

Bezugszeichenliste

1   Vorrichtung
2   Kreisringgebäude
3   Boden
4   Wände
5   Decke
6   Keimkasten
7   Laufringe
8   Laufrollen
9   Laufrollenböcke
10  Stützen für Laufrollenböcke
11  Zahnstange
12  Vorschubantrieb
13  Hordenträger
14  Hordenboden
15  Seitenwände
16  Laufschienen für Keimkastenwender
17  Verschleißauflage
18  Keimkastenwender
19  Laufrollen des Keimkastenwenders
20  Wendespindeln
21  Wendervorschubantrieb
22  Zahnstangen für Wendervorschub
23  Elastische Abdichtung
24  Schleifleiste
25  Beladevorrichtung
26  Servicesteg
27  Entladevorrichtung
28  Transportmittel
29  Umschlossener Innenbereich
30  Unterhordenraum
31  Leerlaufbereich

**Patentansprüche**

1.  Vorrichtung (1) zur kontinuierlichen Malzproduktion, umfassend

    ein Kreisringgebäude (2), umfassend einen Boden (3), Wände (4) und eine Decke (5), die dem Boden gegenüberliegend angeordnet ist,
    wobei in dem Kreisringgebäude (2) ein beweglicher kreisringförmiger Keimkasten (6) angeordnet ist, welcher dazu ausgelegt ist, sich ohne Unterbrechung permanent vorwärtszubewegen,
    wobei der Keimkasten (6) einen Hordenboden (14) und Seitenwände (15) aufweist,
    wobei an einer vom Hordenboden (14) abgewandten Oberseite der Seitenwände (15) ein Keimkastenwender (18) angeordnet ist,
    wobei der Keimkastenwender (18) vom Keimkasten (6) mitgeführt wird und zum Keimkasten (6) beweglich ist.

2.  Vorrichtung (1) nach Anspruch 1, wobei ein Unterhordenraum (30), welcher zwischen Boden (3) und Hordenboden (14) im Kreisringgebäude (2) angeordnet ist, in mehrere Sektionen unterteilt ist, wobei zur Unterteilung Raumteiler vorgesehen sind, welche den Übertritt von Prozessluft zwischen benachbarten Sektionen verhindern.

3.  Vorrichtung (1) nach einem der vorhergehenden Ansprüche, wobei die Vorrichtung weiterhin eine Beladevorrichtung (25) umfasst, welche ortsfest im Kreisringgebäude (2) angeordnet ist.

4.  Vorrichtung (1) nach einem der vorhergehenden Ansprüche, wobei die Vorrichtung (1) weiterhin eine Austragsvorrichtung oder Entladevorrichtung (27) aufweist, welche ortsfest im Kreisringgebäude (2) angeordnet und zum Austrag des Darrmalzes ausgelegt ist.

5. Vorrichtung (1) nach Anspruch 4, wobei der Keimkasten (6) weiterhin einen Leerlaufbereich (31) aufweist, der sich in Keimkastenlaufrichtung hinter der Entladevorrichtung (27) befindet, welche ortsfest im Kreisringgebäude (2) angeordnet ist.

6. Vorrichtung (1) nach einem der vorhergehenden Ansprüche, wobei die Vorrichtung (1) eine Darrvorrichtung umfasst, die im Kreisringgebäude (2), insbesondere im Keimkasten (6), nach einem Keimbereich, insbesondere in Keimkastenlaufrichtung vor einer Entladevorrichtung, angeordnet ist.

7. Vorrichtung (1) nach einem der vorhergehenden Ansprüche, wobei die Vorrichtung (1) eine Weichvorrichtung umfasst, welche stromaufwärts der Beladevorrichtung außerhalb des Kreisringgebäudes (2) angeordnet ist.

8. Vorrichtung (1) nach einem der vorhergehenden Ansprüche, wobei die oberen Seitenwände (15) mit Laufschienen (16) versehen sind, auf denen der Keimkastenwender (18) mittels eines eigenen Vorschubantriebs bewegbar ist.

9. Verfahren zur Malzproduktion mit einer Vorrichtung (1) nach einem der vorhergehenden Ansprüche, umfassend

    kontinuierliches Einbringen von Getreide,
    Durchlaufen eines Keimprozesses,
    kontinuierliches Ausbringen des prozessierten Getreides.

10. Verfahren nach Anspruch 9 weiterhin umfassend:

    Durchlaufen eines Schwelk- und Darrprozesses nach dem Keimprozess, und
    kontinuierliches Austragen des prozessierten Getreides als Darrmalz.


**Claims**

1. An Apparatus (1) for continuous malt production, comprising

    a circular ring building (2), comprising a floor (3), walls (4) and a ceiling (5), which is arranged opposite the floor,
    wherein a movable circular ring-shaped germination box (6) is arranged in the circular ring building (2), which is designed to move forward permanently without interruption,
    wherein the germination box (6) has a tray floor (14) and side walls (15), wherein a germination box turner (18) is arranged on an upper side of the side walls (15) facing away from the tray floor (14),
    wherein the germination box turner (18) is carried along by the germination box (6) and is movable relative to the germination box (6) .

2. The apparatus (1) according to claim 1, wherein a sub- tray floor - chamber (30), which is arranged between the floor (3) and the tray floor (14) in the circular ring building (2), is subdivided into a plurality of sections, wherein room dividers are provided for subdivision, which prevent the passage of process air between adjacent sections.

3. The apparatus (1) according to one of the preceding claims, wherein the device further comprises a loading device (25) which is arranged in a stationary manner in the circular ring building (2).

4. The apparatus (1) according to one of the preceding claims, wherein the device (1) further comprises a discharge device or unloading device (27) which is arranged in a stationary manner in the circular ring building (2) and is designed for discharging the kilned malt.

5. The apparatus (1) according to claim 4, wherein the germination box (6) further comprises an idle area (31) which is located behind the unloading device (27) in the direction of germination box travel, which is arranged in a stationary manner in the circular ring building (2).

6. The apparatus (1) according to one of the preceding claims, wherein the apparatus (1) comprises a kilning device which is arranged in the circular ring building (2), in particular in the germination box (6), after a germination region, in particular in the direction of germination in front of an unloading device.

7. The apparatus (1) according to one of the preceding claims, wherein the apparatus (1) comprises a steeping device which is arranged upstream of the loading device outside the circular ring building (2).

8. The apparatus (1) according to one of the preceding claims, wherein the upper side walls (15) are provided with running rails (16) on which the germination box turner (18) is movable by means of its own feed drive.

9. A method for producing malt with an apparatus (1) according to any one of the preceding claims, comprising

    continuously introducing grain,

passing through a germination process, continuously discharging the processed grain.

10. The method according to claim 9 further comprising:

passing through a withering and kilning process after the germination process, and continuously discharging the processed grain as kilned malt.

**Revendications**

1. Dispositif (1) pour la production continue de malt, comprenant

un bâtiment en anneau circulaire (2), comprenant un fond (3), des parois (4) et un plafond (5), qui est disposé à l'opposé du fond, une boîte à germer (6) mobile en forme d'anneau circulaire étant disposé dans le bâtiment en anneau circulaire (2), lequel est conçu pour se déplacer en permanence vers l'avant sans interruption, la boîte à germer (6) présentant une plaque de fond (14) et des parois latérales (15), un retourneur de germoir (18) étant disposé sur une face supérieure des parois latérales (15) opposée à la plaque de fond (14), le retourneur de germoir (18) étant entraîné par la boîte à germer (6) et étant mobile par rapport à la boîte à germer (6).

2. Dispositif (1) selon la revendication 1, dans lequel un espace sous la plaque de fond (30), qui est disposé entre le fond (3) et la plaque de fond (14) dans le bâtiment circulaire (2), est subdivisé en plusieurs sections, des séparateurs d'espace étant prévus pour la subdivision, lesquels empêchent le passage d'air de processus entre des sections voisines.

3. Dispositif (1) selon l'une des revendications précédentes, dans lequel le dispositif comprend en outre un dispositif de chargement (25) qui est disposé de manière fixe dans le bâtiment circulaire (2).

4. Dispositif (1) selon l'une des revendications précédentes, le dispositif (1) présentant en outre un dispositif d'évacuation ou de déchargement (27) qui est disposé de manière fixe dans le bâtiment circulaire (2) et qui est conçu pour l'évacuation du malt touraillé.

5. Dispositif (1) selon la revendication 4, dans lequel la boîte à germer (6) comprend en outre une zone de marche à vide (31) qui se trouve, dans le sens de marche de la boîte à germer, derrière le dispositif de déchargement (27) qui est disposé de manière fixe dans le bâtiment circulaire (2).

6. Dispositif (1) selon l'une des revendications précédentes, dans lequel le dispositif (1) comprend un dispositif de touraillage disposé dans le bâtiment circulaire (2), notamment dans la boîte à germer (6), en aval d'une zone de germination, notamment en amont d'un dispositif de déchargement dans le sens de déplacement de la boîte à germer.

7. Dispositif (1) selon l'une des revendications précédentes, dans lequel le dispositif (1) comprend un dispositif de trempage disposé en amont du dispositif de chargement, à l'extérieur du bâtiment annulaire (2).

8. Dispositif (1) selon l'une des revendications précédentes, dans lequel les parois latérales supérieures (15) sont pourvues de rails de roulement (16) sur lesquels le retourneur de germoir (18) peut être déplacé au moyen d'un entraînement d'avance propre.

9. Procédé de production de malt avec un dispositif (1) selon l'une des revendications précédentes, comprenant

l'introduction en continu de céréales, le déroulement d'un processus de germination, l'évacuation en continu des céréales traitées.

10. Procédé selon la revendication 9 comprenant en outre :
le passage par un processus de séchage et de touraillage après le processus de germination, et l'évacuation en continu des céréales traitées sous forme de malt touraillé.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1274548
- DE 3918438 A1
- DE 2101848 A1

**In der Beschreibung aufgeführte Nicht-Patentliteratur**

- **LUDWIG NARZISS**. Die Bierbrauerei. Enke Verlag, 1976, vol. 1, 164-242
- **NARZISS**. Die Technologie der Malzbereitung. Enke Verlag, 1976, vol. 1, 164-242
- **LUDWIG NARZIß**. Die Technologie der Malzbereitung, Abriss der Bierbrauerrei. WILEY-VCH Verlag